Europäisches Patentamt

European Patent Office

Office européen des brevets

(11) Veröffentlichungsnummer: **0 499 056 A1**

# (12) EUROPÄISCHE PATENTANMELDUNG

(21) Anmeldenummer: **92100965.0**

(22) Anmeldetag: **22.01.92**

(51) Int. Cl.5: **F16C 39/02**, F03D 11/00

(30) Priorität: **12.02.91 DE 4104137**

(43) Veröffentlichungstag der Anmeldung:
**19.08.92 Patentblatt 92/34**

(84) Benannte Vertragsstaaten:
**BE DE DK ES FR GB GR IT NL SE**

(71) Anmelder: **HOESCH AKTIENGESELLSCHAFT**
**Eberhardstrasse 12 Postfach 101616**
**W-4600 Dortmund 1(DE)**

(72) Erfinder: **Pluta, Dieter**
**Kronprinzenstrasse 68**
**W-4600 Dortmund 1(DE)**

(54) **Mittenfreies Grosswälzlager.**

㊼ Um ein mittenfreies Großwälzlager (1), insbesondere für die Maschinenhauslagerung von Windkraftanlagen, bestehend aus zwei Laufringen (2, 3), zwischen diesen abrollenden Wälzkörpern (4) und einer Drehschwingungen des Lagers dämpfenden Bremseinrichtung, welche aus wenigstens einer mit dem einen Lagerring (3) verbundenen Bremsfläche (18) und einem mit dem anderen Lagerring (2) drehfest verbundenen Bremsbelag (16) besteht, der mittels einer von außen einstellbaren Anpreßvorrichtung (21) gegen die Bremsfläche (18) gedrückt wird, derartig weiterzubilden, daß das Lager von der Normalkraft aus der Bremseinrichtung entlastet wird, weist die Anpreßvorrichtung (21) eine Keilfläche oder Kegelfläche auf, die zwei beidseitig daran anliegende, in eine umlaufende Ausnehmung (11) des Gegenringes (3, 9) eingreifende, normal zur Achse (24) der Anpreßvorrichtung (21) bewegliche Bremsbacken (13, 14) gegen zwei sich gegenüberliegende Bremsflächen (17, 18) der Ausnehmung (11) preßt.

Fig. 1

Die Erfindung betrifft ein mittenfreies Großwälzlager, insbesondere für die Maschinenhauslagerung von Windkraftanlagen nach dem Oberbegriff des Anspruchs 1.

Bei Wälzlagerdrehverbindungen an Windkraftanlagen besteht grundsätzlich die Gefahr, daß sie nach relativ kurzer Zeit durch Riffelbildung in den Laufbahnen ausfallen. Dieses Phänomen wird insbesondere durch geringste Schwenkbewegung zum Ausgleich der Windrichtung erzeugt, bei der es zu einem Gleiten der Wälzkörper auf der Laufbahn kommt. Das gleiche Phänomen zeigt sich jedoch auch bei drehbaren Aufbauten auf Bojen, bei denen eine derartige geringe Schwenkbewegung durch die Wellenbewegung eingeleitet wird. Um diesen Verschleiß auszuschalten, ist es bekannt, durch verschiedene Maßnahmen den geringen Drehwiderstand bei Wälzlagern zu erhöhen. Die DE 37 25 972 A 1 schlägt hierzu vor, eine zusätzliche umlaufende Bremseinrichtung einzusetzen. Die Bremskraft und somit der gewünschte Drehwiderstand kann von außen eingestellt werden. Nachteilig bei dieser Ausbildung wirkt die aus der Bremseinrichtung resultierende Normalkraft, die zwischen den Lagerringen eingeleitet wird, um das Bremsmoment zu erzeugen, als zusätzliche Belastung auf das Lager. Daher muß entweder das Lager vergrößert werden, oder seine Lebensdauer ist reduziert.

Der Erfindung liegt die Aufgabe zugrunde, die bekannten Wälzlagerdrehverbindungen mit einer zusätzlichen Bremseinrichtung derartig weiterzubilden, daß das Lager von der Normalkraft aus der Bremseinrichtung entlastet wird.

Diese Aufgabe wird erfindungsgemäß durch das kennzeichnende Merkmal des Anspruchs 1 gelöst. Vorteilhafte Aus- und Weiterbildungen sind in den Ansprüchen 2 bis 7 beschrieben.

Die mit der Erfindung erzielten Vorteile bestehen insbesondere darin, daß das Lager nicht mehr von der Normalkraft der Bremseinrichtung belastet wird. Darüber hinaus ergibt sich vorteilhaft, daß sich die erforderliche Normalkraft durch den Einsatz von zwei gleichartigen Bremsbacken, die auf zwei Bremsflächen wirken; halbiert.

Ein Ausführungsbeispiel der Erfindung ist in der Zeichnung dargestellt und wird im folgenden näher beschrieben. Es zeigen

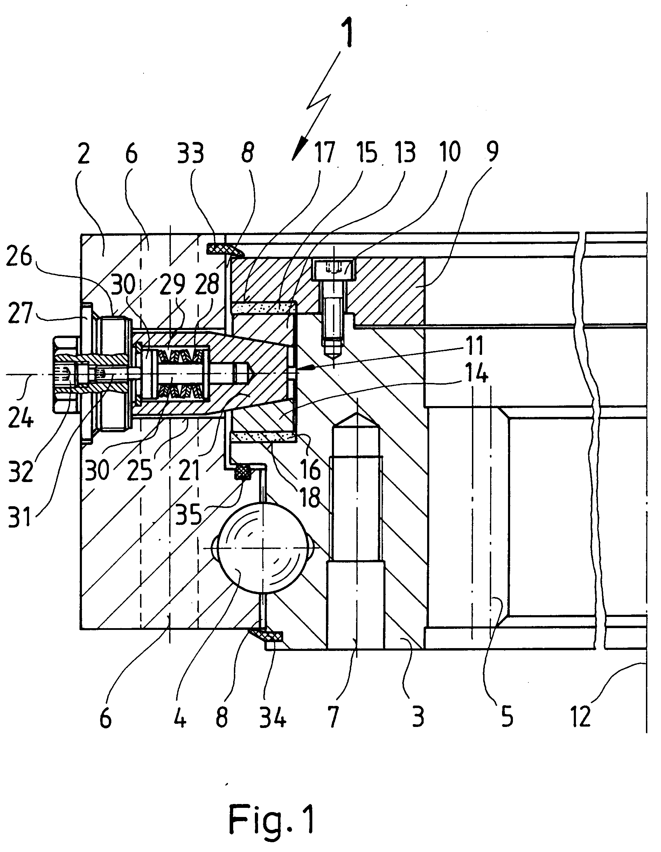

Fig. 1: den Schnitt durch eine Lagerhälfte des Erfindungsgegenstandes,

Fig. 2: die Ansicht eines Abschnitts des Innenringes vom Lagerspalt aus gesehen und

Fig. 3: die Draufsicht auf eine Bremsbacke mit seiner Umgebung.

Das Großwälzlager 1 weist einen Außenring 2 und einen Innenring 3 auf, die drehbar über Kugeln als Wälzkörper 4 miteinander verbunden sind. Der Innenring 3 besitzt eine Verzahnung 5, in die ein nicht dargestelltes Ritzel eines Drehantriebes eingreift. Über Befestigungsbohrungen 6, 7 ist die nicht dargestellte Anschlußkonstruktion mit dem Großwälzlager 1 verbunden. Zwischen den Lagerringen 2, 3 befindet sich ein Lagerspalt 8. Der Innenring 3 ist durch einen Zusatzring 9 abgedeckt und über Schrauben 10 mit diesem verbunden. Der Zusatzring 9 ist im gezeigten Ausführungsbeispiel ein Teil des Innenringes 3. Es ist möglich, diesen Teil auch durch die einteilige Ausbildung des Innenringes zu bilden. Es ist jedoch auch denkbar, daß dieser Zusatzring 9 Teil der Anschlußkonstruktion ist.

Innenring 3 und Zusatzring 9 sind zusammen mit einer umlaufenden, im Querschnitt U-förmigen Ausnehmung 11 ausgebildet. In diese Ausnehmung 11 sind zwei parallel zur Lagerachse 12 bewegliche Bremsbacken 13, 14 angeordnet. Diese können jedoch in gleicher Weise senkrecht oder schräg zur Lagerachse 12 beweglich sein. Die Bremsbacken 13, 14 sind an ihrer Oberfläche mit Bremsbelägen 15, 16 versehen, die gegen Bremsflächen 17, 18 am Innenring 3 und Zusatzring 9 angedrückt werden. Die Bremsbeläge 15, 16 können auch am Innenring 3 und Zusatzring 9 befestigt sein und dann gegen Bremsflächen der Bremsbacken 13, 14 wirken.

In Kegelöffnungen 19 oder Keilöffnungen 20, die jeweils hälftig die Bremsbacken 13, 14 durchdringen, greifen Anpreßvorrichtungen 21 ein, die in diesem Bereich eine entsprechende kegelförmige Außenkontur 22 oder keilförmige Außenkontur 23 aufweisen.

Die Anpreßvorrichtung 21 bewegt sich in Richtung ihrer Achse 24 normal zur Bewegungsrichtung der Bremsbacken 13, 14. Sie ist in einer Ausnehmung 25 des Außenringes 2 geführt. Diese Ausnehmung 25 setzt sich nach außen in einer Verschlußbohrung 26 fort und durchdringt den Außenring 2 vollständig. Die Verschlußbohrung 26 nimmt eine Verschlußschraube 27 auf, gegen die sich die Anpreßvorrichtung 21 über Federn 28 abstützt. Im Ausführungsbeispiel sind diese Federn als Tellerfedern ausgebildet und in einer Bohrung 29 der Anpreßvorrichtung 21 angeordnet. Die Federn 28 stützen sich nicht direkt gegen die Verschlußschraube 27 ab, sondern über einen Andrückbolzen 30, der über eine zentral in der Verschlußschraube 27 angeordnete Stellschraube 31 verstellt werden kann. Dadurch wird erreicht, daß die Federn 28 mehr oder minder vorgespannt sind und damit die Anpreßvorrichtung 21 eine einstellbare Normalkraft der Bremsbacken 13, 14 auf die Bremsflächen 17, 18 erzeugt. Darüber hinaus wird durch diese Maßnahme erreicht, daß Fertigungstoleranzen ausgeglichen werden und daß eine Nachstellmöglichkeit bei Verschleiß der Bremsbeläge 15, 16 erzielt wird. Eine Verstellung oder Verschmutzung der Stellschraube 31 wird durch das Vorsetzen einer Abdichtschraube 32 erreicht. Das gesamte Lagersystem wird am oberen und unteren Ende des Lagerspalts durch Lippendichtungen 33, 34 abgedichtet. Eine weitere Dichtung 35 ist im Lagerspalt 8 zwischen den Wälzkörpern 4 und der Ausnehmung 25 angeordnet. Dadurch wird sichergestellt, daß zum einen das Schmiermittel, vorzugsweise Wälzlagerfett, der Lagerung nicht in das Bremssystem eindringt. Zum anderen wird erreicht, daß der Abrieb von den Bremsbacken nicht in das Lagersystem gelangt.

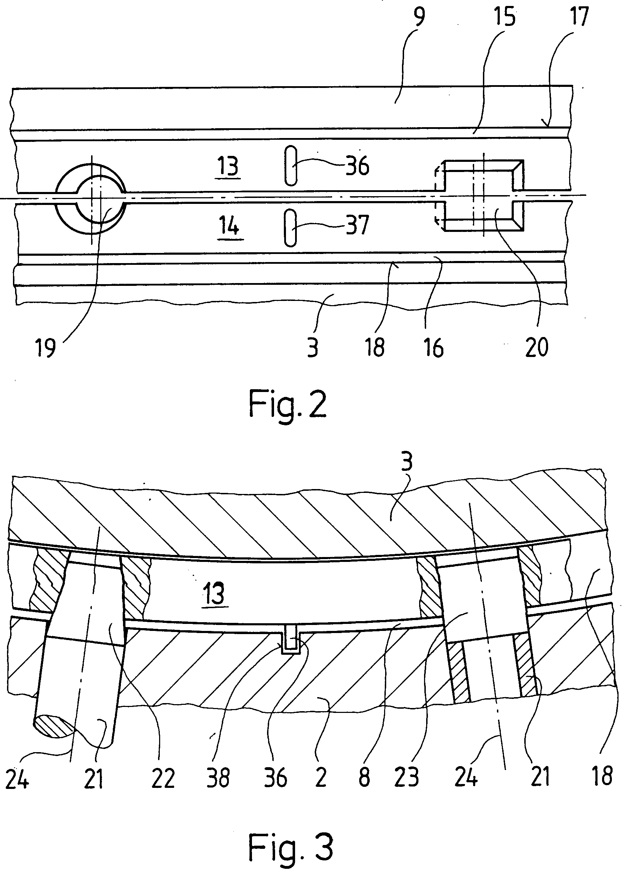

Wie in den Figuren 2 und 3 dargestellt, können die Bremsbacken 13, 14 mit Mitnehmern 36, 37 ausgebildet sein, die in Nuten 38 des Außenringes eingreifen. Durch diese Maßnahme wird eine Funktionstrennung von Übertragung des Bremsmoments von den Bremsbacken 13, 14 auf den zugehörigen Außenring 2 und Spreizen der Bremsbacken 13, 14 erreicht.

## Bezugszeichenliste

| 1 | Großwälzlager |
|---|---|
| 2 | Außenring |
| 3 | Innenring |
| 4 | Wälzkörper |
| 5 | Verzahnung |
| 6 | Befestigungsbohrung |
| 7 | Befestigungsbohrung |
| 8 | Lagerspalt |
| 9 | Zusatzring |
| 10 | Schraube |
| 11 | Ausnehmung |
| 12 | Lagerachse |
| 13 | Bremsbacke |
| 14 | Bremsbacke |
| 15 | Bremsbelag |
| 16 | Bremsbelag |
| 17 | Bremsfläche |
| 18 | Bremsfläche |
| 19 | Kegelöffnung |
| 20 | Keilöffnung |
| 21 | Anpreßvorrichtung |
| 22 | kegelförmige Außenkontor |
| 23 | keilförmige Außenkontur |
| 24 | Achse |
| 25 | Ausnehmung |
| 26 | Verschlußbohrung |
| 27 | Verschlußschraube |
| 28 | Feder |
| 29 | Bohrung |
| 30 | Andrückbolzen |
| 31 | Stellschraube |
| 32 | Abdichtschraube |
| 33 | Lippendichtung |
| 34 | Lippendichtung |
| 35 | Dichtung |
| 36 | Mitnehmer |
| 37 | Mitnehmer |
| 38 | Nut |

## Patentansprüche

1. Mittenfreies Großwälzlager, insbesondere für die Maschinenhauslagerung von Windkraftanlagen, bestehend aus zwei Laufringen, zwischen diesen abrollenden Wälzkörpern und einer Drehschwingungen des Lagers dämpfenden Bremseinrichtung, welche aus wenigstens einer mit dem einen Lagerring verbundenen Bremsfläche und einem mit dem anderen Lagerring drehfest verbundenen Bremsbelag besteht, der mittels einer von außen einstellbaren Anpreßvorrichtung gegen die Bremsfläche gedrückt wird, dadurch gekennzeichnet, daß die Anpreßvorrichtung (21) eine Keilfläche (23) oder Kegelfläche (22) aufweist, die zwei beidseitig daran anliegende, in eine umlaufende Ausnehmung (11) des Gegenringes (3, 9) eingreifende, normal zur Achse (24) der Anpreßvorrichtung (21) bewegliche Bremsbacken (13, 14) gegen zwei sich gegenüberliegende Bremsflächen (17, 18) der Ausnehmung (11) preßt.

2. Großwälzlager nach Anspruch 1, dadurch gekennzeichnet, daß die Ausnehmung (11) im Querschnitt U-förmig ausgebildet ist.

3. Großwälzlager nach Anspruch 1, dadurch gekennzeichnet, daß die Ausnehmung (11) im Querschnitt L-förmig ausgebildet und an der, an der Anschlußkonstruktion anliegenden Oberfläche des zugehörigen Lagerringes (3) angeordnet ist.

4. Großwälzlager nach einem oder mehreren der Ansprüche 1 bis 3, dadurch gekennzeichnet, daß zwischen den Wälzkörpern (4) und den Bremsbacken (13, 14) eine, den Lagerspalt (8) zwischen den Laufringen (2, 3) verschließende Dichtung (35) angeordnet ist.

5. Großwälzlager nach einem oder mehreren der Ansprüche 1 bis 4, dadurch gekennzeichnet, daß die Anpreßvorrichtung (21) über Federn (28) zwischen die Bremsbacken (13, 14) gepreßt wird.

6. Großwälzlager nach einem oder mehreren der Ansprüche 1 bis 5, dadurch gekennzeichnet, daß die Bremsbacken (13, 14) über die Anpreßvorrichtung (21) mit dem zugehörigen Lagerring (2) drehfest verbunden sind.

7. Großwälzlager nach Anspruch 6, dadurch gekennzeichnet, daß die Bremsbacken (13, 14) zusätzlich über im zugehörigen Lagerring (2) geführte Mitnehmer (36, 37) mit diesem drehfest verbunden sind.

Fig. 1

Fig. 2

Fig. 3

| Category | Citation of document with indication, where appropriate, of relevant passages | Relevant to claim | CLASSIFICATION OF THE APPLICATION (Int. Cl.5) |
|---|---|---|---|
| D,Y | <u>DE - A - 3 725 972</u> (INA WÄLZLAGER SCHAEFFLER KG) * Figurenbeschreibung; Fig. 2,4 * | 1 | F 16 C 39/02 F 03 D 11/00 |
| Y | SOVIET INVENTIONS ILLUSTRATED, P,Q Sektion, Woche 8401, 15. Februar 1984, DERWENT PUBLICATIONS LTD., London, Q 63 Seite 2 * SU-994 829 (KHARK AUTO ROAD INS) * & SU-286 175 | 1 | |
| A | + Totality + | 5 | |
| A | <u>GB - A - 2 192 680</u> (SKF GES. m.b.H.) * Totality * | 1 | |
| A | <u>GB - A - 2 147 672</u> (A. TEVES GES. m.b.H.) * Totality * | 1 | |
| A | <u>US - A - 4 443 045</u> (KETSCHKER et al.) * Figurenbeschreibung; Fig. 2-4 * | 1 | |
| A | <u>US - A - 4 018 313</u> (HART et al.) * Figurenbeschreibung * | | |
| A | <u>GB - A - 1 438 181</u> (SKF INDUSTRIES TRADING COMP.B.V.) * Totality * | | |

DOCUMENTS CONSIDERED TO BE RELEVANT — EP 92100965.0

TECHNICAL FIELDS SEARCHED (Int. Cl.5)

F 16 C
F 03 D
F 16 D
B 61 F

The present search report has been drawn up for all claims

| Place of search | Date of completion of the search | Examiner |
|---|---|---|
| WIEN | 19-05-1992 | ROUSSARIAN |